(19)

**Europäisches Patentamt**

**European Patent Office**

**Office européen des brevets**

(11) **EP 2 475 030 A1**

(12) **EUROPEAN PATENT APPLICATION**

(43) Date of publication:
**11.07.2012 Bulletin 2012/28**

(51) Int Cl.:
*H01M 2/26* (2006.01)    *H01M 4/70* (2006.01)
*H01M 10/50* (2006.01)

(21) Application number: **11185568.0**

(22) Date of filing: **18.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.01.2011 US 430893 P**
**21.09.2011 US 239295**

(71) Applicant: **Samsung SDI Co., Ltd.**
**Yongin-si, Gyeonggi-do (KR)**

(72) Inventor: **Byun, In-Seop**
**Yongin-si**
**Gyeonggi-do (KR)**

(74) Representative: **Walaski, Jan Filip et al**
**Venner Shipley LLP**
**200 Aldersgate**
**London**
**EC1A 4HD (GB)**

(54) **Secondary battery**

(57)    An electrode assembly comprises a first electrode plate comprising a first coated region coated with a first electrode active material and a first uncoated region extending from the first coated region, and a second electrode plate comprising a second coated region coated with a second electrode active material and a second uncoated region extending from the second coated region, wherein the length of a first boundary between the first uncoated region and the first coated region is greater than the length of a second boundary between the second uncoated region and the second coated region.

FIG. 5

**Description**

The present invention relates to an electrode assembly for a secondary battery and more particularly, to the structure of the electrode assembly.

Recently, compact and light portable electric/electronic devices such as cellular phones, notebook computers, and camcorders have been actively developed and produced. Thus, a portable electric/electronic device includes a battery pack so as to be able to operate in any place without a separate power source. The battery pack includes a rechargeable secondary battery, in consideration of economical aspects. Examples of a representative secondary battery are a nickel-cadmium (Ni-Cd) battery, a nickel-hydrogen (Ni-MH) battery, a lithium (Li) battery, and a lithium (Li)-ion battery. In particular, the Li-ion battery has an operating voltage that is about three times higher than those of the Ni-Cd battery and the Ni-MH battery, which have been widely used as power sources of portable electronic devices. In addition, the Li-ion battery has been widely used due to having a high energy density per specific weight. A secondary battery uses a Li-based oxide as a positive active material, and uses a carbon material as a negative active material.

According to an aspect of the invention, there is provided an electrode assembly comprising a first electrode plate comprising a first coated region coated with a first electrode active material and a first uncoated region extending from the first coated region, and a second electrode plate comprising a second coated region coated with a second electrode active material and a second uncoated region extending from the second coated region, wherein the length of a first boundary between the first uncoated region and the first coated region is greater than the length of a second boundary between the second uncoated region and the second coated region.

The lengths of the first and second boundaries may be arranged to equalise the heat generated at the first and second boundaries when current passes through the first and second electrode plates.

The length of the first boundary may be greater than that of the second boundary when the resistivity of the first electrode active material is greater than the resistivity of the second electrode active material.

The first coated region and the first uncoated region may together form a first current collector and the second coated region and the second uncoated region may together form a second current collector, wherein the length of the first boundary $w_1$ is set according to the equation:

$$w_1 = \sqrt{\frac{R_1}{R_2}} \cdot \frac{d_2}{d_1} \, w_2$$

where $w_2$ is the length of the second boundary, R1 is the resistance between the first current collector and the first electrode active material, R2 is the resistance between the second current collector and the second electrode active material, d1 is the thickness of the first current collector and d2 is the thickness of the second current collector.

The sum of the first and second lengths may be less than or equal to the total width of the first or the second electrode plate. The first length may be between about 50% and about 92% of the total width.

The first and second uncoated portions may not overlap. The first length may be up to about 11.39 times the second length.

The first uncoated region may extend across the whole width of the first electrode plate and the first electrode plate may further comprise a third uncoated region extending from the first uncoated region, the third uncoated region being narrower than the first uncoated region.

The widths of the second uncoated region and the third uncoated region may be substantially the same.

The first electrode plate comprises a positive electrode plate and the second electrode plate comprises a negative electrode plate.

A secondary battery that incorporates an electrode assembly as claimed may be prevented from deteriorating.

Embodiments of the invention will now be described by way of example with reference to the accompanying drawings, in which:

FIG. 1 is an exploded perspective view of a lithium ion polymer battery, according to an embodiment of the present invention;

FIG. 2 is an exploded perspective view of an electrode assembly of FIG. 1;

FIG. 3 is an image showing a temperature distribution of a positive electrode plate after discharge has ended, according to an embodiment of the present invention;

FIG. 4A is an enlarged perspective view of a portion 'IVa' of FIG. 2;

FIG. 4B is an enlarged perspective view of a portion 'IVb' of FIG. 2;

FIG. 5 is a plan view of an electrode assembly viewed from above, according to a modified embodiment of the electrode assembly of FIG. 2; and

FIG. 6 is perspective view of a positive electrode plate, according to an embodiment of the present invention.

One or more embodiments of the present invention include a secondary battery that is configured as any of various types. For example, the secondary battery may be a nickel-cadmium (Ni-Cd) battery, a nickel-hydrogen (Ni-MH) battery, or a lithium (Li) battery. The lithium secondary battery may be, for example, a lithium metal battery using a liquid electrolyte, a lithium ion battery, or a lithium polymer battery using a high-molecular weight solid electrolyte. The lithium polymer battery may be classified as a complete solid-type lithium polymer battery that does not contain an organic electrolyte, or a lithium ion polymer battery that uses a gel-type high-molecular weight electrolyte, according to a type of a high-molecular solid electrolyte. Hereinafter, a structure of a secondary battery will be described in terms of a lithium ion polymer battery, but it is not limited thereto, and thus secondary batteries of various types may be used.

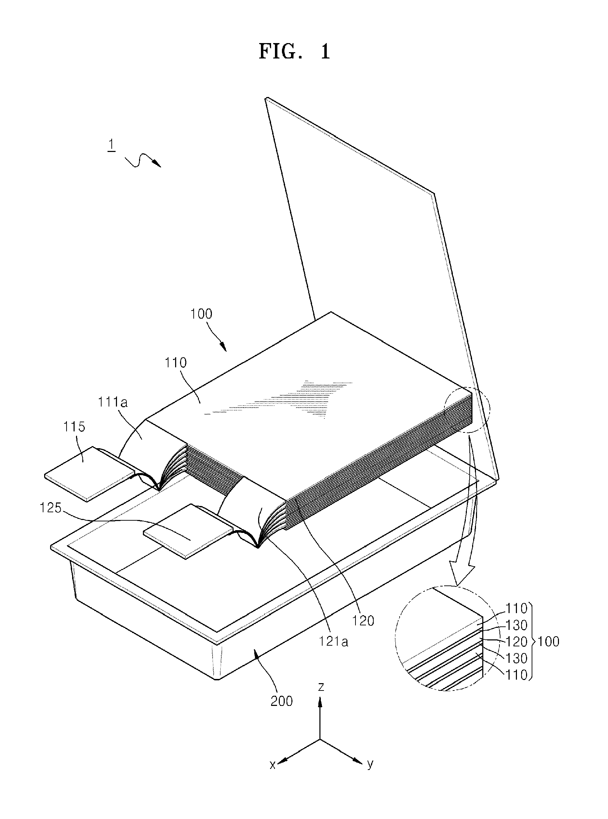

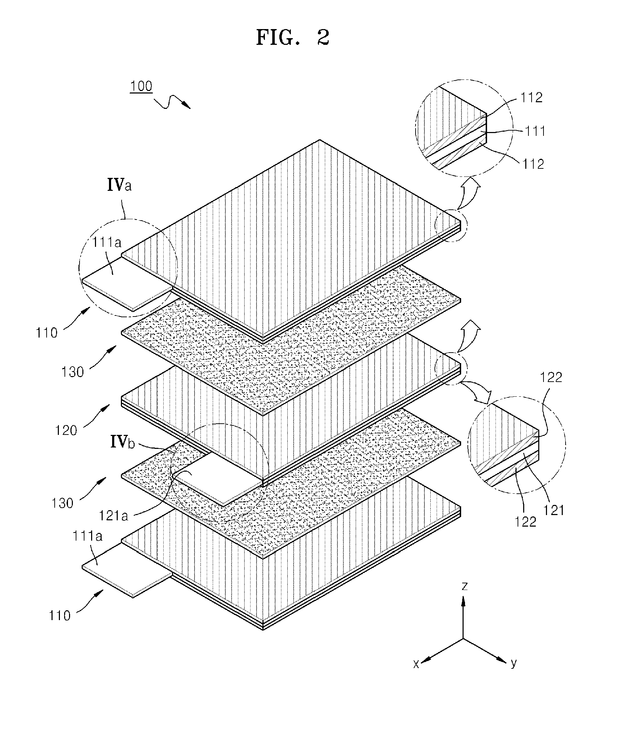

With reference to FIGS. 1 and 2, a structure of the lithium ion polymer battery 1 will be described. The lithium ion polymer battery 1 may include an electrode assembly 100, a case 200, and an electrolyte (not shown).

The electrode assembly 100 may include a positive electrode plate 110, a negative electrode plate 120, and a separator 130. The electrode assembly 100 may be formed by sequentially stacking the positive electrode plate 110 and the negative electrode plate 120. A separator 130 may be interposed between the positive electrode plate 110 and the negative electrode plate 120. The positive electrode plate 110 may include a positive electrode material 111, a positive electrode non-coated (uncoated) portion 111a, and a positive active material 112. The positive electrode material 111 may comprise a positive electrode current collector and may include, for example, aluminium (Al). A portion of the positive electrode material 111 may extend to form the positive electrode non-coated portion 111a. The positive active material 112 may include a typical active material. For example, the positive active material 112 may include a lithium cobalt oxide (LiCoO$_2$), but is not limited thereto. That is, the positive active material 112 may include a silicon-based material, a tin-based material, an aluminium-based material, a germanium-based material, or the like. In this case, the positive active material 112 may include a lithium titanium oxide (LTO), in addition to a typical active material.

Referring to FIG. 1, the positive electrode non-coated portion 111a may be connected to a positive electrode lead tap, or tab, 115 connected to an external terminal of the case 200.

The negative electrode plate 120 may include a negative electrode material 121, a negative electrode non-coated (uncoated) portion 121a, and a negative active material 122. The negative electrode material 121 may comprise a negative electrode current collector and may include, for example, copper (Cu). A portion of the negative electrode material 121 may extend to form the negative electrode non-coated portion 121a. The negative active material 122 may include a typical active material. For example, the negative active material 122 may include graphite. Referring to FIG. 1, the negative electrode non-coated portion 121a may be connected to a negative electrode lead tap, or tab, 125 connected to an external terminal of the case 200.

The case 200 may accommodate the electrode assembly 100 and the electrolyte (not shown). The case 200 may be a flexible pouch case.

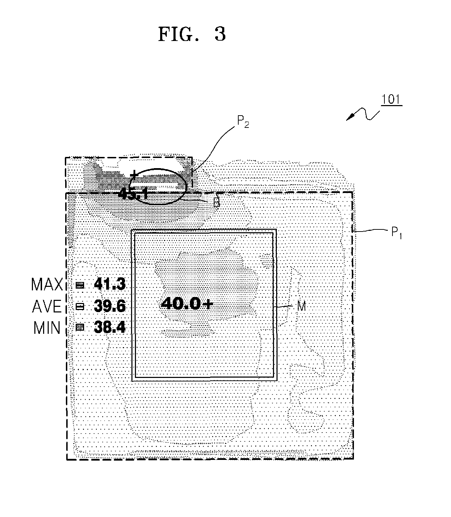

FIG. 3 is an image showing a temperature distribution of a positive electrode plate 101 after discharge has ended, according to an embodiment of the present invention. Referring to FIG. 3, it may be known that temperatures of a first positive electrode plate portion P1 corresponding to the positive active material 112, and a second positive electrode plate portion P2 extending from the first positive electrode plate portion P1, are different. In this case, the reference numerals P1 and P2 correspond to the reference numerals 111 and 111a of FIG. 2, respectively. With regard to a temperature distribution of a central portion M of the first positive electrode plate portion P1, a minimum temperature is 38.4°C, a maximum temperature is 41.3°C, and an average temperature is 39.6°C, as shown in FIG. 3. A temperature of a point in the central portion M is 40.0°C, as shown in FIG. 3. On the other hand, a temperature of a boundary portion (B) between the first positive electrode plate portion P1 and the second positive electrode plate portion P2 is 45.1°C. That is, the temperature of the boundary portion (B) between the first positive electrode plate portion P1 and the second positive electrode plate portion P2 is higher than points such as those of the central portion M. It may be known that a temperature is increased at a point corresponding to a boundary portion between the positive active material 112 and the positive electrode non-coated portion 111a. A temperature is actively increased in the boundary portion (B) in the positive electrode plates 101 and 110, compared to the negative electrode plate 120. This is because, since resistivity of the positive active material 112 is generally high, heat is generated at the boundary portion (B) between the positive active material 112 and the positive electrode material 111 due to Joule heating. The more heat generated between the positive active material 112 and the positive electrode material 111, the higher a current value of C-rate. Such heat intensifies deterioration of a battery as charge/discharge are repeatedly performed, thereby reducing the lifetime and stability of the battery. Thus, it is required to minimize such deterioration.

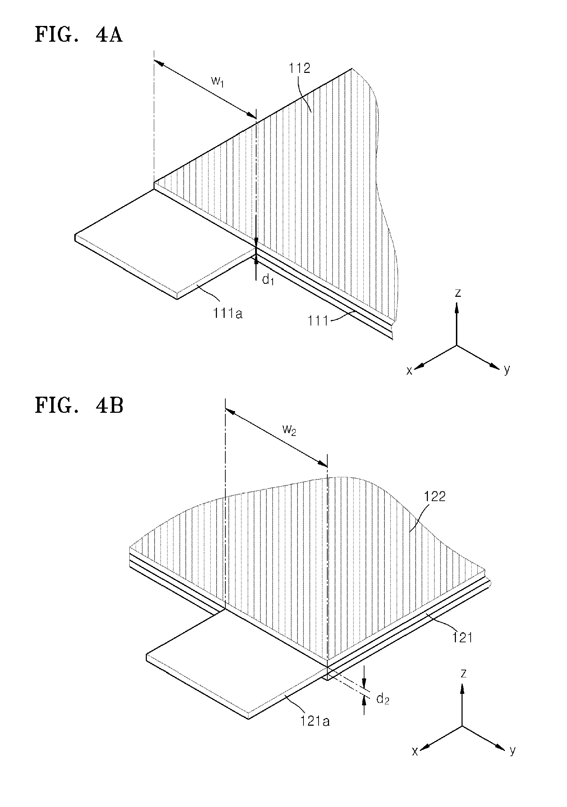

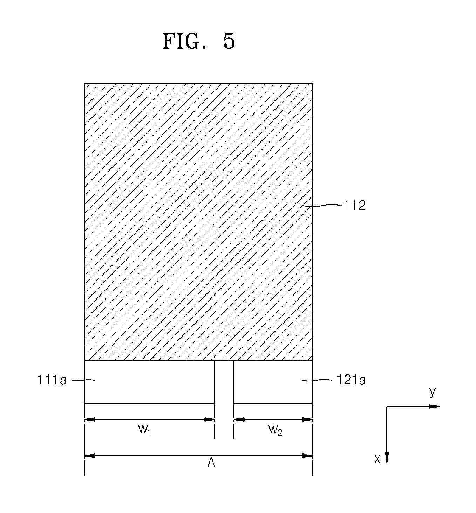

With reference to FIGS. 4A, 4B, and 5, a positive electrode boundary interval $w_1$ (ie. the length of the boundary) between the positive active material 112 and the positive electrode non-coated portion 111a, and a negative electrode boundary interval $w_2$ between the negative active material 122 and the negative electrode non-coated portion 121a will be described.

FIG. 4A is an enlarged perspective view of a portion 'IVa' of FIG. 2. FIG. 4B is an enlarged perspective view of a portion 'IVb' of FIG. 2. FIG. 5 is a plan view of an electrode assembly 100 viewed from above, according to a modified embodiment of the electrode assembly 100 of FIG. 2.

Comparing the positive electrode plate 110 and the negative electrode plate 120, since the negative active material 122 of the negative electrode plate 120 uses a material with low resistivity, such as graphite, a resistance difference between the negative active material 122 and the negative electrode non-coated portion 121a including Cu or the like may not be great, but a resistance difference between the positive active material 112 with high resistivity and the positive electrode non-coated portion 111a may be great.

In this case, the positive electrode boundary interval $w_1$ is defined as an interval between the positive active material 112 and the positive electrode non-coated portion 111a, and the negative electrode boundary interval $w_2$ is defined as an interval between the negative active material 122 and the negative electrode non-coated portion 121a. A current is passed through the positive electrode non-coated portion 111a, the negative electrode non-coated portion 121a, and the like through charge/discharge, and heat is generated between the positive active material 112 and the positive electrode non-coated portion 111a, and between the negative active material 122 and the negative electrode non-coated portion 121a, due to Joule heating. In this case, the amount heat generated due to Joule heating is affected by the positive electrode boundary interval $w_1$ and the negative electrode boundary interval $w_2$. Thus, the positive electrode boundary interval $w_1$, which generates a large amount of heat due to having a high resistance value associated therewith, may be wider than the negative electrode boundary interval $w_2$. In this case, FIG. 5 is a plan view of the electrode assembly 100, in which the positive electrode boundary interval $w_1$ is wider than the negative electrode boundary interval $w_2$, viewed from above. The positive electrode boundary interval $w_1$ and the negative electrode boundary interval $w_2$ will be described in more detail, with reference to equations. When a capacity C of each unit electrode plate is obtained by dividing the entire capacity of the lithium ion polymer battery 1 by the number of positive electrode plates 110 and negative electrode plates 120, a current density of unit area of the positive electrode plate 110 or the negative electrode plate 120 may be obtained by dividing the capacity C by a unit area. For example, in FIG. 4A, when a capacity of the positive electrode plate 110 is C, a current density of unit area ($mA/mm^2$) of a boundary portion between the positive active material 112 and the positive electrode non-coated portion 111a may be obtained by $C/w_1 d_1$. Similarly, in FIG. 4B, when a capacity of the negative electrode plate 120 is C, a current density of unit area ($mA/mm^2$) of a boundary portion between the negative active material 122 and the negative electrode non-coated portion 121a may be obtained by $C/w_2 d_2$.

In this case, $d_1$ is a thickness of the positive electrode current collector 111, and $d_2$ is a thickness of the negative electrode current collector 121.

In this case, a heat amount Q generated per unit area may be calculated according to Equation 1 below

$$Q = I^2 Rt \quad \text{(J)} \qquad \qquad \dots (1)$$

In Equation 1, I is a current density of unit area ($mA/mm^2$), R is a resistance value ($\Omega$), and t is a period of time (sec). A heat amount Q1 per unit area of the positive electrode plate 110 is $(\dfrac{C}{w_1 d_1})^2 R_1 t$. In this case, $R_1$ is a resistance value between the positive active material 112 and the positive electrode material 111. A heat amount (Q2) per unit area of the negative electrode plate 120 is $(\dfrac{C}{w_2 d_2})^2 R_2 t$. In this case, $R_2$ is a resistance value between the negative active material 122 and the negative electrode material 121.

In general, the resistance $R_1$ between the positive active material 112 and the positive electrode material 111 is greater than the resistance $R_2$ between the negative active material 122 and the negative electrode material 121. Thus, in boundary portions between the positive active material 112/ the negative active material 122 and the positive electrode non-coated portion 111a/ the negative electrode non-coated portion 121a, the heat amount Q1 per unit area of the positive electrode plate 110 is greater than the heat amount Q2 per unit area of the negative electrode plate 120, and thus the positive electrode plate 110 may deteriorate and thus be damaged.

In general, a difference between the thickness $d_1$ of the positive electrode plate 110 and the thickness $d_2$ of the negative electrode plate 120 is not that great. Since it is not easy to design-change the resistances $R_1$ and $R_2$, the positive electrode boundary interval $w_1$ and the negative electrode boundary interval $w_2$ may be controlled so that heat generated at a boundary portion of the positive electrode plate 110 may not be higher than heat generated at a boundary portion of the negative electrode plate 120.

According to Equations 2 and 3, the positive electrode boundary interval $w_1$ and the negative electrode boundary interval $w_2$ may be calculated to be such that the heat amount Q1 per unit area of the positive electrode plate 110 is equal to the heat amount Q2 per unit area of the negative electrode plate 120.

$$\left(\frac{C}{w_1 d_1}\right)^2 R_1 t = \frac{\left(\frac{C}{w_2 d_2}\right)^2 R_2 t}{} \qquad \dots (2)$$

$$w_1 = \sqrt{\frac{R_1}{R_2}} \cdot \frac{d_2}{d_1} w_2 \qquad \dots (3)$$

That is, when the heat amount Q1 per unit area of the positive electrode plate 110 is equal to the heat amount Q2 per unit area of the negative electrode plate 120, according to Equation 2, the positive electrode boundary interval $w_1$ may be expressed using the negative electrode boundary interval $w_2$ and constants, according to Equation 3.

Thus, when the positive electrode boundary interval $w_1$ and the negative electrode boundary interval $w_2$ satisfy Equation 3, heat may be uniformly generated at the boundary portions of the positive electrode plate 110 and the negative electrode plate 120 rather than being generated more at one side.

Hereinafter, the heat amount Q1 per unit area of the positive electrode plate 110 and the heat amount Q2 per unit area of the negative electrode plate 120 according to the positive electrode boundary interval $w_1$ and the negative electrode boundary interval $w_2$ will be described. The positive electrode material 111 may include Al, and a resistance value of Al may be about 0.3 Ω. A surface resistance value of the positive active material 112 may be about 620 Ω. In this case, a resistance value between the positive electrode material 111 and the positive active material 112 may be about 300 Ω. A thickness of the positive electrode material 111 may be about 20μm.

In addition, the negative electrode material 121 may include Cu, and a resistance value of Cu may be about 0.3 Ω. A surface resistance value of the negative active material 122 may be about 2.8 Ω. A resistance value between the negative electrode material 121 and the negative active material 122 may be about 1.3 Ω. A thickness of the negative electrode material 121 may be about 15μm. In this case, by substituting the values into the constants of Equation 3, the following result may be obtained according to Equation 4.

$$w_1 = \sqrt{\frac{300}{1.3}} \cdot \frac{20}{15} w_2 = 11.39 w_2 \qquad \dots (4)$$

That is, when the negative electrode boundary interval $w_2$ is 8.8% of the positive electrode boundary interval $w_1$ ($w_2/w_1$), the heat amount Q1 per unit area of the positive electrode plate 110 may be equal to the heat amount Q2 per unit area of the negative electrode plate 120.

Referring to FIG. 5, the sum of the positive electrode boundary interval $w_1$ and the negative electrode boundary interval $w_2$ may not be greater than an entire width A of the positive electrode plate 110 and the negative electrode plate 120. If not, the positive electrode non-coated portion 111a may overlap the negative electrode non-coated portion 121a and thus may cause a short circuit. Thus, when the positive electrode non-coated portion 111a and the negative electrode non-coated portion 121a are maximally enlarged, that is, when the sum of the positive electrode boundary interval $w_1$ and the negative electrode boundary interval $w_2$ is equal to the width A of the positive electrode plate 110 and the negative electrode plate 120, the positive electrode boundary interval $w_1$ may be enlarged to a maximum of 92% (11.39/12.39) of the entire width A of the positive electrode plate 110 and the negative electrode plate 120.

If the sum of the positive electrode non-coated portion 111a and the negative electrode non-coated portion 121a is equal to entire width A of the positive electrode plate 110 and the negative electrode plate 120, the positive electrode boundary interval $w_1$ needs to be equal to or greater than the negative electrode boundary interval $w_2$, and thus the positive electrode boundary interval $w_1$ may be 50 to 92% of the entire width A of the positive electrode plate 110 and the negative electrode plate 120.

In addition, as the positive electrode boundary interval $w_1$ is enlarged, a contact area between the positive electrode lead tap 115 and the positive electrode non-coated portion 111a is further increased, and a resistance value between the positive electrode non-coated portion 111a and the positive electrode lead tap 115 may also be reduced.

That is, the positive electrode non-coated portion 111a and the positive electrode lead tap 115 are electrically connected, and thus resistance is present between the positive electrode non-coated portion 111a and the positive electrode lead tap 115. Since a contact area between the positive electrode non-coated portion 111a and the positive electrode lead tap 115 is enlarged, resistance between the positive electrode non-coated portion 111a and the positive electrode lead tap 115 is reduced. Thus, heat generated due to the resistance between the positive electrode non-coated portion 111a and the positive electrode lead tap 115 may be reduced.

The heat amount Q1 per unit area of the positive electrode plate 110 and the heat amount Q2 per unit area of the negative electrode plate 120 are calculated as follows. The electrode assembly 100 may include 42 pairs of positive electrode plates 110 and negative electrode plates 120. In detail, the electrode assembly 100 includes the 42 pairs of positive electrode plates 110 and negative electrode plates 120, wherein a single negative electrode plate 120 and a single positive electrode plate 110 corresponding thereto may constitute each pair, and may further include a negative electrode plate 120 corresponding to the outermost positive electrode 110. That is, the 43 negative electrode plates 120 and the 42 positive electrode plates 110 may be alternately disposed. In this case, the number of negative electrode plates 120 and the number of positive electrode plates 110 are just examples, and are not particularly limited.

In this case, an area of the positive electrode plates 110 or the negative electrode plates 120 may be about 540cm$^2$. A current density of the lithium ion polymer battery 1 may be 1.25mA/cm$^2$. A capacity of a single lithium ion polymer battery 1 according to a current capacity per unit weight of an active material of a unit cell may be about 56.98 A. Thus, a capacity per sheet of the positive electrode plate 110/ the negative electrode plate 120, obtained by dividing the capacity of the lithium ion polymer battery 1 by 42, may be about 1357 mA.

Table 1 shows a heat amount according to the positive electrode boundary interval (length) $w_1$. Referring to FIGS. 2 and 4A, when a reference corresponds to a case where an entire width of the positive electrode plate 110 is about 245 mm, and the positive electrode boundary interval $w_1$ is 90 mm, the heat amount Q1 per unit area of the positive electrode plate 110 is obtained.

Table 1

| Positive electrode boundary interval ratio (%) | 130% | 120% | 110% | 100% | 90% | 80% |
|---|---|---|---|---|---|---|
| Positive electrode boundary interval $w_1$(mm) | 117 | 108 | 99 | 90 | 81 | 72 |
| Positive material boundary sectional area (mm$^2$) | 2.34 | 2.2 | 2.0 | 1.8 | 1.6 | 1.4 |
| Current density per unit area (mA/ mm$^2$) | 579.8 | 628.1 | 685.2 | 753.7 | 837.4 | 942.1 |
| Heat amount Q1 per unit area of positive electrode plate (J) | 101 | 118 | 141 | 170 | 210 | 266 |
| Increase and decrease with respect to reference | 59% | 69% | 83% | 100% | 123% | 156% |

In FIG. 1, a sectional area of a positive electrode material boundary is a value obtained by multiplying the positive electrode boundary interval $w_1$ by the thickness $d_1$ of the positive electrode material 111. A current density of unit area is a value obtained by dividing a capacity of each sheet of the positive electrode plate 110 of 1357 mA by the sectional area of the positive electrode material boundary. The heat amount Q1 per unit area of the positive electrode plate 110 is obtained by obtaining a value based on Equation 1 and then multiplying the value by 10$^6$.

Table 2

| Negative electrode boundary interval ratio ( %) | 100% | 90% | 80% | 70% | 60% |
|---|---|---|---|---|---|
| Negative electrode boundary interval $w_2$ (mn) | 90 | 81 | 72 | 63 | 54 |
| Negative material bound sectional area (mm$^2$) ary | 1.35 | 1.215 | 1.08 | 0.945 | 0.81 |
| Current density per unit area (mA/mm$^2$) | 1004.938 | 1116.598 | 1256.481 | 1435.979 | 1675.309 |
| Heat amount Q2 per unit area of negative electrode plate (J) | 1.312871 | 1.620829 | 2.052369 | 2.680646 | 3.648657 |
| Increase and decrease with respect to reference | 100% | 123% | 156% | 204% | 278% |

(continued)

| Negative electrode boundary interval ratio (%) | 50% | | 40% | 30% | 20% | 10% | 8.8% |
| --- | --- | --- | --- | --- | --- | --- | --- |
| Negative electrode boundary interval $w_2$ (mm) | 45 | | 36 | 27 | 18 | 9 | 7.92 |
| Negative material boundary sectional area (mm$^2$) | 0.675 | | 0.54 | 0.405 | 0.27 | 0.135 | 0.1188 |
| Current density per unit area (mA/mm$^2$) | .37 | | 2512.9 | 63 3350.6 | 2 5025.926 | 10051.85 | 11422.56 |
| Heat amount Q2 per unit area of negative electrode plate (J) | 5.25 4066 | | 8.2094 | 78 14.594 | 6 32.83791 | 131.3516 | 169.53 |
| Increase and decrease with respect to reference | 400 % | | 625% | 1112% | 2501% | 10005% | 12913% |

Values of Table 2 may be obtained by using a method similar to that of Table 1. In this case, a positive/negative electrode boundary interval ratio (%) refers to a degree of increase and decrease with respect to a reference based on a case where the positive electrode boundary interval (length) $w_1$ and the negative electrode boundary interval (length) $w_2$ are each 90 mm. The increase and decrease with respect to the reference refers to increase and decrease in a heat amount based on a case where the positive electrode boundary interval $w_1$ and the negative electrode boundary interval $w_2$ are each 90 mm. In this case, the widths of the positive electrode boundary interval $w_1$ and the negative electrode boundary interval $w_2$ may be determined in consideration of the sum of the heat amount Q1 per unit area of the positive electrode plate 110 and the heat amount Q2 per unit area of the negative electrode plate 120. For example, when the negative electrode boundary interval $w_2$ (mm) is 9 mm, the heat amount Q2 (J) per unit area of the negative electrode plate 120 may be about 131 J, and a width of the positive electrode boundary interval $w_1$ may be determined to be between 99 and 108 mm so that the heat amount Q1 (J) per unit area of the positive electrode plate 110 may be equal to the heat amount Q2 per unit area of the negative electrode plate 120.

Referring to Table 1, when the positive electrode boundary interval ratio is 100%, the heat amount Q1 per unit area of the positive electrode plate 110 is about 170J. Referring to Table 2, when the negative electrode boundary interval ratio is 8.8%, the heat amount Q2 per unit area of the negative electrode plate 120 is about 169.53J. Likewise, when the heat amount Q1 per unit area of the positive electrode plate 110 is similar to the heat amount Q2 per unit area of the negative electrode plate 120, deterioration of a battery due to non-uniform heat amount may be reduced. If a temperature is partially increased due to a non-uniform heat amount, the lifetime of the battery may be reduced. For example, a solid electrolyte interface (SEI) layer disposed in the battery is a protective layer for facilitating stable charge/discharge of an electrolyte, and may be weak to heat and thus damaged at a temperature of about 60 to about 80°C. Thus, if heat amounts are uniform, the SEI layer and the like may not be damaged due to a non-uniform heat amount, thereby ensuring the stability and lifetime of the battery.

In this case, it is obvious that the combination of the heat amount Q1 per unit area of the positive electrode plate 110 and the heat amount Q2 per unit area of the negative electrode plate 120 has various forms. This is generalized in Equation 5 below.

$$F(w_1, w_2) = (\frac{C}{w_1 d_1})^2 R_1 t + (\frac{C}{w_2 d_2})^2 R_2 t$$

$$\ldots (5)$$

In this case, the positive electrode boundary interval $w_1$ and the negative electrode boundary interval $w_2$ for

minimizing a function $F(w_1, w_2)$ may be obtained. In another design condition, it is obvious that the positive electrode boundary interval $w_1$ and the negative electrode boundary interval $w_2$ may be obtained simultaneously according to another equation. For example, in FIG. 5, when the sum of the positive electrode boundary interval $w_1$ and the negative electrode boundary interval $w_2$ is equal to the entire width A of the positive electrode plate 110 and the negative electrode plate 120, Equation 6 is obtained.

$$w_1 + w_2 = A \qquad \qquad \ldots(6)$$

In this case, by combining Equations 5 and 6, the maximum and minimum values of the positive electrode boundary interval $w_1$ and the negative electrode boundary interval $w_2$ may be obtained.

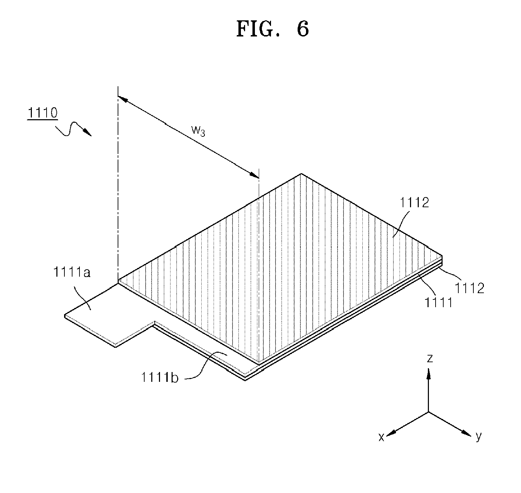

Referring to FIG. 6, a modified example of the positive electrode plate 110 of FIG. 2 will now be described. Referring to FIGS. 2, 4A, 4B, and 5, the positive active material 112 covers the positive electrode material 111, and the positive electrode non-coated portion 111a with a width $w_1$ that is smaller than an entire width A of the positive electrode material 111 extends from the positive electrode material 111. However, since the heat amount Q1 per unit area of the positive electrode plate 110 is $(\dfrac{C}{w_1 d_1})^2 R_1 t$ , as the positive electrode boundary interval $w_1$ is increased, the heat amount Q1 per unit area of the positive electrode plate 110 is reduced. Thus, in FIG. 6, in order to increase a positive electrode boundary interval $w_3$ in a positive electrode plate 1110, the positive electrode boundary interval $w_3$ may be equal to a width of a positive electrode material 1111. In this case, positive electrode non-coated portions 1111a and 1111b may include a first positive electrode non-coated portion 1111b extending from the positive material 1111 so as to have the same width as that of the positive material 1111, and a second positive electrode non-coated portion 1111a extending from the positive material 1111 so as to have a smaller width than that of the positive material 1111. In this case, the negative electrode non-coated portion 121a has the same structure as in FIG. 2. That is, the electrode assembly 100 may include the positive electrode plate 1110 of FIG. 6, the negative electrode plate 120 of FIG. 2, and the separator 130 interposed therebetween.

Thus, the second positive electrode non-coated portion 1111a of FIG. 6 is the same or similar in width to the negative electrode non-coated portion 121a of FIG. 2, and the positive electrode boundary interval $w_3$ of FIG. 6 is greater than the negative electrode boundary interval $w_2$ of FIG. 4B.

It should be understood that the exemplary embodiments described therein should be considered in a descriptive sense only and not for purposes of limitation. Descriptions of features or aspects within each embodiment should typically be considered as available for other similar features or aspects in other embodiments.

**Claims**

1. An electrode assembly (100) comprising:

   a first electrode plate (110) comprising a first coated region (111) coated with a first electrode active material (112) and a first uncoated region (111a, 1111b) extending from the first coated region; and
   a second electrode plate (120) comprising a second coated region (121) coated with a second electrode active material (122) and a second uncoated region (121a) extending from the second coated region;
   wherein the length ($w_1$) of a first boundary between the first uncoated region and the first coated region is greater than the length of a second boundary ($w_2$) between the second uncoated region and the second coated region.

2. The electrode assembly of claim 1, wherein the lengths of the first and second boundaries are arranged to equalise the heat generated at the first and second boundaries when current passes through the first and second electrode plates.

3. The electrode assembly of claim 1 or 2, wherein the length of the first boundary is greater than that of the second boundary when the resistivity of the first electrode active material is greater than the resistivity of the second electrode active material.

4. The electrode assembly of any one of the preceding claims, wherein the first coated region and the first uncoated region together form a first current collector and the second coated region and the second uncoated region together form a second current collector, wherein the length of the first boundary $w_1$ is set according to the equation:

$$w_1 = \sqrt{\frac{R_1}{R_2}} \cdot \frac{d_2}{d_1} w_2$$

where $w_2$ is the length of the second boundary, R1 is the resistance between the first current collector and the first electrode active material, R2 is the resistance between the second current collector and the second electrode active material, d1 is the thickness of the first current collector and d2 is the thickness of the second current collector.

5. The electrode assembly of any one of the preceding claims wherein the sum of the first and second lengths is less than or equal to the total width of the first or the second electrode plate.

6. The electrode assembly of claim 5, wherein the first length is between about 50% and about 92% of the total width.

7. The electrode assembly of claim 5 or 6, wherein the first and second uncoated portions do not overlap.

8. The electrode assembly of claim 5, 6 or 7, wherein the first length is up to about 11.39 times the second length.

9. The electrode assembly of claim 1, wherein the first uncoated region (1111b) extends across the whole width of the first electrode plate (1110), and the first electrode plate (1110) further comprises a third uncoated region (1111a) extending from the first uncoated region, the third uncoated region being narrower than the first uncoated region.

10. The electrode assembly of claim 9, wherein the widths of the second uncoated region (121a) and the third uncoated region (1111a) are substantially the same.

11. The electrode assembly according to any one of the preceding claims, wherein the first electrode plate (110, 1110) comprises a positive electrode plate and the second electrode plate (120) comprises a negative electrode plate.

12. A secondary battery comprising an electrode assembly according to any one of the preceding claims.

FIG. 1

FIG. 2

## FIG. 3

FIG. 4A

FIG. 4B

## FIG. 5

# FIG. 6

EP 2 475 030 A1

Europäisches Patentamt
European Patent Office
Office européen des brevets

**EUROPEAN SEARCH REPORT**

Application Number

EP 11 18 5568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/169990 A1 (GARDNER WILLIAM H [US] ET AL) 2 July 2009 (2009-07-02) | 1,2,4,5, 7-12 | INV. H01M2/26 H01M4/70 H01M10/50 |
| Y | * paragraphs [0002] - [0011], [0037] - [0043], [0051]; claims 1-5, 20; figures 2A, 3, 9-11 * | 3,6 | |
| X | JP 2001 035476 A (YUASA BATTERY CO LTD) 9 February 2001 (2001-02-09) * paragraphs [0002], [0014], [0015]; figures 1-3 * | 1,5,8,12 | |
| Y | KIM U S ET AL: "Effect of electrode configuration on the thermal behavior of a lithium-polymer battery", JOURNAL OF POWER SOURCES, ELSEVIER SA, CH, vol. 180, no. 2, 1 June 2008 (2008-06-01), pages 909-916, XP022633203, ISSN: 0378-7753, DOI: 10.1016/J.JPOWSOUR.2007.09.054 [retrieved on 2008-04-29] | 3 | |
| A | * abstract; page 911 table 1; page 912 col. 2 lines 17-23; figures 2 and 3 * | 1 | TECHNICAL FIELDS SEARCHED (IPC) H01M |
| Y | US 2005/031947 A1 (YAMADA KAZUO [JP] ET AL) 10 February 2005 (2005-02-10) | 6 | |
| A | * paragraphs [0003], [0016], [0023], [0027], [0034] * | 1 | |
| A | DE 10 2008 018061 A1 (LI TEC BATTERY GMBH [DE]) 15 October 2009 (2009-10-15) * paragraphs [0001] - [0003], [0008] - [0016]; figures 2, 3 * | 1 | |
| A | US 2007/172736 A1 (FUJIKAWA MASATO [JP] ET AL) 26 July 2007 (2007-07-26) * paragraphs [0001], [0064] - [0066]; figure 1 * | 1 | |

-/--

The present search report has been drawn up for all claims

| Place of search | Date of completion of the search | Examiner |
|---|---|---|
| The Hague | 20 April 2012 | Fauché, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**EUROPEAN SEARCH REPORT**

Application Number

EP 11 18 5568

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/154797 A1 (HYUNG YOOEUP [KR] ET AL) 5 July 2007 (2007-07-05) * paragraphs [0003], [0010], [0011], [0034] - [0038]; figures 1, 2 * ----- | 1 | |

TECHNICAL FIELDS
SEARCHED     (IPC)

The present search report has been drawn up for all claims

| Place of search | Date of completion of the search | Examiner |
|---|---|---|
| The Hague | 20 April 2012 | Fauché, Yann |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 11 18 5568

20-04-2012

| Patent document cited in search report | | Publication date | Patent family member(s) | | Publication date |
|---|---|---|---|---|---|
| US 2009169990 | A1 | 02-07-2009 | CN | 101911342 A | 08-12-2010 |
| | | | EP | 2215674 A2 | 11-08-2010 |
| | | | JP | 2011505671 A | 24-02-2011 |
| | | | KR | 20100105634 A | 29-09-2010 |
| | | | TW | 200941809 A | 01-10-2009 |
| | | | US | 2009169990 A1 | 02-07-2009 |
| | | | WO | 2009073492 A2 | 11-06-2009 |
| JP 2001035476 | A | 09-02-2001 | JP | 4568928 B2 | 27-10-2010 |
| | | | JP | 2001035476 A | 09-02-2001 |
| US 2005031947 | A1 | 10-02-2005 | CN | 1507102 A | 23-06-2004 |
| | | | JP | 4072427 B2 | 09-04-2008 |
| | | | JP | 2004193072 A | 08-07-2004 |
| | | | US | 2005031947 A1 | 10-02-2005 |
| DE 102008018061 | A1 | 15-10-2009 | DE | 102008018061 A1 | 15-10-2009 |
| | | | EP | 2274782 A1 | 19-01-2011 |
| | | | US | 2011117429 A1 | 19-05-2011 |
| | | | WO | 2009124696 A1 | 15-10-2009 |
| US 2007172736 | A1 | 26-07-2007 | CN | 1983682 A | 20-06-2007 |
| | | | JP | 2007227357 A | 06-09-2007 |
| | | | KR | 20070078381 A | 31-07-2007 |
| | | | US | 2007172736 A1 | 26-07-2007 |
| US 2007154797 | A1 | 05-07-2007 | NONE | | |

EPO FORM P0459